# EUROPEAN PATENT SPECIFICATION

(11) **EP 1 391 492 B1**
(45) Date of publication and mention of the grant of the patent: **14.06.2006**
(21) Application number: 03016422.2
(22) Date of filing: 21.07.2003
(51) Int. Cl.: C09D 183/04

(54) **Process for primer coating fiber-reinforced plastics substrates**
Verfahren zum Beschichten von faserverstärkten Kunststoffsubstraten mit einem Primer
Procédé pour revêtir des substrats plastiques renforcés par des fibres avec un promoteur d'adhésion

(30) Priority: 22.08.2002 US 405237 P
(43) Date of publication of application: 25.02.2004
(73) Proprietor: E.I. du Pont de Nemours and Company, Wilmington, DE 19898 (US)
(72) Inventor: Wissing, Klaus, 40627 Düsseldorf (DE); Flosbach, Carmen, 42287 Wuppertal (DE); Frese, Peter, 42277 Wuppertal (DE); Reis, Oliver, 58456 Witten (DE)
(74) Representative: DuPont Performance Coatings Biering/Blum/Kimpel

(56) References cited:
- WO-A-00/67318
- US-A- 5 516 812
- US-A- 5 523 443

## Description

### Field of the Invention

The invention relates to a process for primer coating fiber-reinforced plastics substrate used in automotive construction, wherein curing of the primer layer proceeds with high energy radiation and by means of moisture.

### Description of Related Art

In recent times, the use of fiber-reinforced plastics parts, for example so-called IMC, SMC or BMC plastics parts (IMC = in-mould coated compounds, SMC = sheet moulded compounds, BMC = bulk moulded compounds), has become ever more widespread, especially in automotive construction (wings, bonnets, boot lids, doors, mirror housings etc.), due to their advantageous properties. Despite their major advantages as components (good shaping properties, elevated heat resistance, dimensional stability, ruggedness), they exhibit disadvantages with regard to coating. When coating layers applied thereto are cured thermally in a temperature range of, for example, above 80°C, gases are released which give rise to unacceptable defects in the surface of subsequently applied coating layer(s), such as craters or burst or closed gas bubbles, which are known in short as "popping defects". While these defects affect the entire surface on SMC and BMC parts, only uncoated areas, such as edges, are affected on IMC parts.

It is known from WO 00/68323 to use coating materials which are curable thermally and with actinic radiation, in particular UV (ultraviolet) radiation, (dual-cure coating materials) as antipopping primers for SMC and BMC plastics parts. In addition to other constituents, the resin solids of the dual-cure coating materials contain at least two constituents each having functional groups which serve the purpose of cross-linking with actinic radiation. One of the two constituents moreover contains functional groups which are capable of entering into thermal cross-linking reactions. The second constituent may contain functional groups complementary to the functional groups of the other constituent; if this is not the case, the coating material contains an appropriately functionalized thermally curable constituent. These are thermally externally cross-linking dual-cure coating compositions. Two-component dual-cure coating compositions, the cross-linking of which proceeds, on the one hand, by radiation-induced free-radical polymerization of olefinic double bonds and, on the other, by the thermally induced addition reaction between hydroxyl groups and NCO groups, are described therein as being particularly advantageous. Further dual cure coatings are disclosed in US 55116812, US5523443 and WO 99/67318.

The object of the invention is to provide a process for priming fiber-reinforced plastics substrates used in automotive construction, selected from wings, bonnets, boot lids, doors and mirror housings. It should be possible in said process to apply the primer layer from a thermally self-cross-linkable dual-cure coating composition. The primer layer is intended effectively to suppress the occurrence of popping defects in coating layers applied onto the primer layer during thermal curing of said coating layers.

Various dual cure systems are known in coatings technology which combine curing by means of high energy radiation, in particular by means of UV radiation, with moisture curing. Such systems generally comprise organopolysiloxane binders which contain both hydrolysable silane groups and free-radically polymerizable, olefinically unsaturated groups. WO 99/67318, for example, describes a binder system based on two differently functionalized polysiloxanes, wherein one polysiloxane comprises (meth)acryloyl groups and the second polysiloxane comprises ethylenically unsaturated groups and hydrolysable silane groups. This binder system is used in potting applications and in coating compositions for electronic components and electronic circuits.

JP 5311082 describes a radiation- and moisture-curing binder system which is produced by reacting a polyether comprising amino end groups or a polybutadiene/acrylonitrile copolymer with compounds which contain epoxy and alkoxysilane groups and further reacting the resultant reaction product with compounds which contain (meth)acryloyl groups and, for example, NCO groups. One-layer coatings are obtained which are tack-free after 24 hours and exhibit good tear strength and elongation.

US 5,523,443 discloses a UV-curable coating system with good electrical properties for electronic circuits, which system additionally cures by means of moisture. A urea oligomer with acryloyl groups and alkoxysilane groups is used, which oligomer is produced, for example, from a urea derivative, in particular the reaction product of a diisocyanate and an amine containing alkoxysilane groups and a (meth)acryloyl-functional diol.

Nothing is known from the prior art concerning the use of coating compositions which are curable both by means of high energy radiation and by means of moisture for priming fiber-reinforced plastics substrates used in automotive construction, selected from wings, bonnets, boot lids, doors and mirror housings.

By applying a primer coating composition based on a binder system curable with high energy radiation and by means of moisture directly onto the surface of fiber-reinforced plastics parts, it is possible effectively to suppress the occurrence of popping defects in coating layers applied onto the primer layer during thermal curing of said coating layers. The frequency of occurrence of popping defects is reduced, for example, by 90% or more in comparison with the frequency of occurrence of popping defects in coating layers applied directly onto a corresponding unprimed fiber-reinforced plastics part. The cured primer layers also exhibit adequate cross-linking and hardness in possible shaded areas of the fiber-reinforced plastics substrates, even at low curing temperatures of for example no more than 80°C.

### Summary of the Invention

The invention relates to a process for primer coating fiber-reinforced plastics substrates being vehicle parts made from fiber-reinforced plastic selected from wings, bonnets, boot lids, doors and mirror housings, by applying a primer layer onto a fiber-reinforced plastics substrate and curing the applied primer layer, wherein the primer layer is prepared from a coating composition which comprises a binder system with free-radically polymerizable olefinic double bonds and with hydrolyzable alkoxysilane groups, wherein the resin solids content of the coating composition exhibits an equivalent weight of C=C double bonds of 200 to 2000, preferably of 300 to 1500, and a content of silicon bound in alkoxysilane groups of 1 to 10 wt-%, preferably of 1 to 7 wt-%, especially preferably of 2 to 6 wt-%, and wherein curing of the primer coating layer proceeds by free-radical polymerization of the C=C double bonds on irradiation with high energy radiation and by the formation of siloxane bridges under the action of moisture.

### Detailed Description of the Embodiments

The resin solids content of the coating compositions curable by means of high energy radiation and by means of moisture includes the binder system with free-radically polymerizable olefinic double bonds and with hydrolyzable alkoxysilane groups, together with any optionally present reactive diluents.

The coating compositions curable by means of high energy radiation and by means of moisture used in the process according to the invention contain binders with free-radically polymerizable olefinic double bonds and with hydrolyzable alkoxysilane groups. The free-radically polymerizable olefinic double bonds and the hydrolyzable alkoxysilane groups may here in principle be present in the same binder and/or in separate binders.

The coating compositions used in the process according to the invention cure by means of two different cross-linking mechanisms. Cross-linking proceeds, on the one hand, by means of free-radical polymerization of olefinic double bonds and, on the other, by means of the hydrolysis and subsequent condensation of alkoxysilane groups to form siloxane bridges.

Suitable binders with free-radically polymerizable olefinic double bonds which may be considered are, for example, any binders known to the skilled person which can be cross-linked by free-radical polymerization. These binders are prepolymers, such as, polymers and oligomers, containing, per molecule, one or more, for example, on average 1 to 20, preferably 2 to 10, particularly preferably 2 to 6 free-radically polymerizable olefinic double bonds.

The polymerizable double bonds may, for-example, be present in the form of (meth)acryloyl, vinyl, allyl, maleate and/or fumarate groups. (Meth)acryloyl groups are preferred.

Both here and below, (meth)acryloyl and (meth)acrylic are respectively intended to mean acryloyl and/or methacryloyl and acrylic and/or methacrylic.

Examples of prepolymers or oligomers include (meth)acryloyl-functional poly(meth)acrylates, polyurethane (meth)acrylates, polyester (meth)acrylates, unsaturated polyesters, polyether (meth)acrylates, silicone (meth)acrylates, epoxy (meth)acrylates, amino (meth)acrylates and melamine (meth)acrylates. The number average molar mass Mn of these compounds may, for example, be from 500 to 10,000 g/mol, preferably from 500 to 5,000 g/mol. The binders may be used individually or as a mixture.

Compounds which contain free-radically polymerizable double bonds in the form of the preferred (meth)acryloyl groups may be produced in accordance with conventional methods. This may proceed, for example, by: transesterifying OH-functional resins, such as OH-functional polyesters, polyacrylates, polyurethanes, polyethers or epoxy resins, with alkyl esters of (meth)acrylic acid; esterifying the stated OH-functional resins with (meth)acrylic acid; reacting the stated OH-functional resins with isocyanate-functional (meth)acrylates; reacting acid-functional resins, such as polyesters, polyacrylates, polyurethanes with epoxy-functional (meth)acrylates; reacting epoxy-functional resins, such as polyesters, polyacrylates, epoxy resins with (meth)acrylic acid. These production methods stated by way of example are described in the literature and known to the person skilled in the art.

The (meth)acryloyl-functional prepolymers may be used in combination with reactive diluents, i.e., free-radically polymerizable low molecular weight compounds with a molar mass of below 500 g/mol. The reactive diluents may be mono-, di- or polyunsaturated. Examples of monounsaturated reactive diluents are (meth)acrylic acid and the esters thereof, maleic acid and the semi-esters thereof, vinyl acetate, vinyl ethers, substituted vinyl ureas, styrene, vinyltoluene. Examples of diunsaturated reactive diluents are di(meth)acrylates, such as, alkylene glycol di(meth)acrylate, polyethylene glycol di(meth)acrylate, 1,3-butanediol di(meth)acrylate, vinyl (meth)acrylate, allyl (meth)acrylate, divinylbenzene, dipropylene glycol di(meth)acrylate, hexanediol di(meth)acrylate. Examples of polyunsaturated reactive diluents are glycerol tri(meth)acrylate, trimethylolpropane tri(meth)acrylate, pentaerythritol tri(meth)acrylate, pentaerythritol tetra(meth)acrylate. The reactive diluents may be used alone or in mixture.

Binders with hydrolyzable alkoxysilane groups which may be considered are those conventional binders known to the person skilled in the art which may be functionalized with alkoxysilane groups. The alkoxysilane groups may comprise monoalkoxysilane, dialkoxysilane and/or trialkoxysilane groups. Trialkoxysilane groups are preferred. The alkoxysilane groups comprise, for example, 1-10, preferably, 1-3 C atoms in the alkoxy residue.

The binders bearing alkoxysilane groups may be produced, for example, by: copolymerizing alkoxysilane-functional (meth)acrylate monomers or by copolymerizing vinylalkoxysilanes; reacting OH-functional resins, such as, OH-functional polyesters, polyacrylates, polyurethanes, polyethers or epoxy resins with isocyanate-functional alkoxysilanes; reacting epoxy-functional resins with aminoalkoxysilanes; reacting acid-functional resins with epoxy-functional alkoxysilanes; reacting isocyanate-functional resins (for example, polyurethanes, polyesterurethane prepolymers, polyetherurethane prepolymers, acrylate copolymers with free NCO groups) with aminoalkoxysilanes; reacting isocyanate-functional resins with OH-functional alkoxysilanes produced in situ, for example, by addition of aminoalkoxysilanes onto cyclic carbonates. The particular reaction must be performed with exclusion of water in order to suppress premature hydrolysis of the alkoxysilane groups.

Binders bearing both olefinic double bonds, in particular (meth)acryloyl groups, and hydrolyzable alkoxysilane groups which may be considered are those conventional binders known to the person skilled in the art which may be functionalized with (meth)acryloyl groups and alkoxysilane groups. These resins may, for example, be produced as follows:
(Meth)acryloyl groups, such as those described above, are first incorporated into an appropriate resin. Residual OH groups may then be reacted with isocyanate-functional alkoxysilanes or residual epoxy groups may be reacted with aminoalkoxysilanes or some of the acryloyl groups may be reacted with aminoalkoxysilanes.

The equivalent ratio of free-radically polymerizable olefinic double bonds to hydrolyzable alkoxysilane groups (mono-, di- and trialkoxysilane groups are in each case calculated as one equivalent) in the binder system may be, for example, 1:0.1 to 1:5, preferably 1:0.2 to 1:4.

The binders with free-radically polymerizable olefinic double bonds and/or hydrolyzable alkoxysilane groups may additionally contain hydroxyl groups. The hydroxyl groups may be obtained or introduced using measures known to the person skilled in the art. For example, the hydroxyl groups may be introduced by reacting NCO groups still present in the binders with polyols. The additionally present hydroxyl groups have a catalytic action on moisture curing and can also react with the alkoxysilane groups under a condensation reaction.

Free-radical inhibitors may be added to the binders in order to prevent premature polymerization of the double bonds present. Examples of free-radical inhibitors are hydroquinone, 4-methoxyphenol, 2,6-di-tert.-butyl-4-methylphenol, phenothiazine, 3,5-di-tert.-butyl-4-hydroxyanisole, 2-tert.-butyl-4-hydroxyanisole, 3-tert.-butyl-4-hydroxyanisole, p-benzoquinone.

The coating compositions curable by means of high energy radiation and by means of moisture which are usable in the process according to the invention are liquid coating compositions, which may contain organic solvents in an amount of, for example, up to 60 wt-%, calculated on the ready-to-apply coating composition.

The organic solvents optionally present in the liquid coating compositions comprise conventional coating solvents.

The coating compositions may contain photoinitiators in order to initiate free-radical polymerization. Suitable photoinitiators include, for example, those which absorb in the wavelength range from 190 to 600 nm. Examples of photoinitiators for free-radically curing systems are benzoin and derivatives, acetophenone and derivatives, such as, for example, 2,2-diacetoxyacetophenone, benzophenone and derivatives, thioxanthone and derivatives, anthraquinone, 1-benzoylcyclohexanol, organophosphorus compounds, such as, for example, acyl phosphine oxides. The photoinitiators are used, for example, in quantities of 0.1-7 wt-%, preferably of 0.5-5 wt-%, relative to the total of free-radically polymerizable prepolymers, reactive diluents and photoinitiators. The photoinitiators may be used individually or in combination. They may also be used in combination with suitable coinitiators, for example amines, such as, tertiary amines.

The coating compositions may contain catalysts to catalyze moisture curing. Examples of such catalysts are Lewis bases, for example, cycloaliphatic amines, such as, diazabicyclooctane, diazabicycloundecene, and diazabicyclononene; aliphatic amines, such as, triethylamine, tripropylamine, diethanolamine, monoethanolamine, triethanolamine, diethylethanolamine, dimethylethanolamine, dipropylethanolamine, and dimethylisopropanolamine. Further examples of catalysts are organo tin compounds, such as, dibutyltin dilaurate, dibutyltin dioctoate and acid catalysts, such as, for example, formic acid, p-toluenesulfonic acid, dodecylbenzenesulfonic acid, dinonylnaphthalenedi- or -monosulfonic acid. The catalysts may be blocked, for example, blocked p-toluenesulfonic acid, dodecylbenzenesulfonic acid, dinonylnaphthalenedisulfonic acid or dinonylnaphthalenemonosulfonic acid. The catalysts may be used individually or in combination with one another.

The coating compositions which may be used in the process according to the invention may be pigmented or unpigmented coating compositions according to a pigment plus extender: resin solids weight ratio in the range of, for example, 0 : 1 to 2:1.

The coating compositions may contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, iron oxide pigments, carbon black, azo pigments, phthalocyanine pigments, quinacridone or pyrrolopyrrole pigments. Examples of special effect-imparting pigments are metal pigments, for example, made from aluminium, copper or other metals; interference pigments, such as, for example, metal oxide coated metal pigments and coated mica. Soluble dyes may also be present. Examples of usable extenders are silicon dioxide, aluminium silicate, barium sulfate, calcium carbonate and talcum.

The coating compositions may also contain constituents which impart electrical conductivity. This may in particular be convenient if, in the process according to the invention, fiber-reinforced plastics substrates which per se have no electrical conductivity are provided with a primer layer. Such substrates may in this manner be provided in a single operation with a primer layer, the electrical conductivity of which makes it possible, for example, to apply further coating layers by electrostatically assisted means. Examples of constituents which impart electrical conductivity are particulate inorganic or organic electrical conductors or semiconductors, such as, for example, iron oxide black, graphite, conductive carbon black, metal powders, molybdenum disulfide and special conductive pigments, such as, for example, doped pearlescent pigments, for example, mica flakes provided with a thin layer of antimony-doped tin oxide, or conductive barium sulfate, in which the particle core is enclosed in a thin layer of antimony-doped tin oxide.

In addition to the already stated initiators, inhibitors and catalysts, the coating composition may contain further conventional coating additives. Examples of further conventional coating additives are levelling agents, rheological agents, such as, highly disperse silica or polymeric urea compounds, thickeners, for example, based on partially cross-linked, carboxy-functional polymers or on polyurethanes, defoamers, wetting agents, anticratering agents, degassing agents, thermolabile initiators, antioxidants and light stabilizers based on HALS (hindered amine light stabilizers) products and/or UV absorbers. The additives are used in conventional amounts known to the person skilled in the art.

The coating compositions may be formulated as single-component or two-component coating compositions, depending upon whether a blocked or unblocked catalyst is used for moisture curing. If an unblocked catalyst is used, the binders curable by means of high energy radiation and by means of moisture, i.e., at least the binders with the hydrolyzable alkoxysilane groups, are present in one component and the unblocked catalyst is present in a second component. If a blocked catalyst is used, the coating compositions may be provided as a single-component formulation without any need to prepare a second component.

In the process according to the invention, primer layers of, for example, a dry film thickness of 20 to 50 µm are applied from the coating compositions onto fiber-reinforced plastics substrates. Application may proceed using known methods and preferably by means of spraying.

The fiber-reinforced plastics substrates to be provided with a primer layer in the process according to the invention may comprise plastics parts reinforced with organic fibers, carbon fibers and/or inorganic fibers, such as, mineral fibers or in particular glass fibers. Examples are in particular conventional IMC, SMC or BMC plastics parts known to the person skilled in the art which, depending upon the composition thereof, may be electrically conductive or electrically non-conductive The parts are automotive parts selected from wings, bonnets, boot lids, doors, mirror housings.

When the coating compositions are applied, it is, for example, possible initially to apply the corresponding coating composition onto the fiber-reinforced plastics substrate, wherein application may be followed by flashing-off, for example, within a period of 5 to 40 minutes, at 20 to 60°C. After the optional intermediate flash-off phase, irradiation with high energy radiation can proceed. UV radiation or electron beam radiation may be used as high energy radiation. UV radiation is preferred. Irradiation may proceed continuously or discontinuously (in cycles).

Irradiation may be carried out, for example, in a belt unit fitted with one or more UV radiation emitters or with one or more UV radiation emitters positioned in front of the object to be irradiated, or the area to be irradiated, or the substrate to be irradiated and/or the UV radiation emitter(s) is(are) moved relative to one another during irradiation. For example, the subject to be irradiated may be moved through an irradiation tunnel fitted with one or more UV radiation emitters, and/or a robot equipped with one or more UV radiation emitters may guide the UV radiation emitter(s) over the substrate surface.

In principle, the duration of irradiation, distance from the object and/or radiation output of the UV radiation emitter may be varied during UV irradiation. The preferred source of radiation comprises UV radiation sources emitting in the wave length range from 180 to 420 nm, in particular, from 200 to 400 nm. Examples of such UV radiation sources are optionally doped high, medium and low pressure mercury vapour emitters and gas discharge tubes, such as, for example, low pressure xenon lamps. Apart from these continuously operating UV radiation sources, however, it is also possible to use discontinuous UV radiation sources. These are preferably so-called high-energy flash devices (UV flash lamps for short). The UV flash lamps may contain a plurality of flash tubes, for example, quartz tubes filled with inert gas, such as, xenon. The UV flash lamps have an illuminance of, for example, at least 10 megalux, preferably, from 10 to 80 megalux per flash discharge. The energy per flash discharge may be, for example, 1 to 10 kJoule.

The irradiation time with UV radiation when UV flash lamps are used as the UV radiation source may be, for example, in the range from 1 millisecond to 400 seconds, preferably, from 4 to 160 seconds, depending on the number of flash discharges selected. The flashes may be triggered, for example, about every 4 seconds. Curing may take place, for example, by means of 1 to 40 successive flash discharges.

If continuous UV radiation sources are used, the irradiation time may be, for example, in the range from a few seconds to about 5 minutes, preferably less than 5 minutes.

The distance between the UV radiation sources and the substrate surface to be irradiated may be, for example, 5 to 60 cm.

Irradiation with UV radiation may proceed in one or more successive irradiation steps. In other words, the energy to be applied by irradiation may be supplied completely in a single irradiation step or in portions in two or more irradiation steps.

Curing under the reaction of moisture is carried out by exposure to conditions of sufficient moisture, e.g., by exposure to humidity. The moisture curing reaction is operative over a broad range of humidity and can be carried out at a relative humidity in the range of, for example, 10-90%, and preferably, 20-80%.

In order to promote rapid development of satisfactory cross-linking in the shaded areas too, it is advantageous to expose the applied coating layer to thermal energy before, during and/or after UV irradiation. The coating layer may, for example, be exposed to temperatures of approximately 60°C to 160°C, preferably, 80°C to 120°C (object temperature in each case). It is, however, particularly advantageous in order to achieve an adequate cross-linking also in the shaded zones for curing to proceed even at temperatures of no more than 80°C in short curing times of, for example, 10 to 30 minutes.

The process according to the invention may be performed on a workshop or an industrial scale, for example, in automotive repair coating or in industrial or automotive original coating.

The fiber-reinforced plastics substrates provided with a primer coat in the process according to the invention may subsequently be further coated, for example provided with a one-layer top coat or with a multilayer coating. Examples of multilayer coatings are multilayer coatings prepared from a surfacer and a top coat layer, from a base coat and a clear coat layer or from a surfacer, base coat and clear coat layer.

Further coating of the fiber-reinforced plastics substrates provided with a primer coat in the process according to the invention may proceed on a workshop or an industrial scale. The fiber-reinforced plastics substrates provided with a primer coat may here be further coated as separate parts or as (a) part(s) of a larger structure to be coated. These options for the performance of further coating may also be combined, i.e., a part may first be coated as a separate part and one or more further coatings may be applied when it is part of a larger structure to be coated. For example, the fiber-reinforced plastics substrates provided with a primer coat may be assembled with at least one other substrate in composite construction to form a larger structure to be coated. Examples of other substrate materials are metal parts and plastics parts other than fiber-reinforced plastics parts, which may in each case be pretreated and/or provided with a previous coating. For example, the fiber-reinforced plastics substrates provided with a primer coat in the form of automotive parts may be attached to the remainder of the automotive body, which generally consists of metal parts, and then coated together therewith.

Several possible variants for coating automotive bodies of composite construction which are produced using fiber-reinforced plastics substrates provided with a primer coat using the process according to the invention may be given below by way of example:
1) Optionally pretreated metal body and electrically non-conductive, fiber-reinforced plastics parts provided with a primer coat are assembled and together pass through a conventional electrodeposition coating (EDC) process, wherein only the metal body is provided with an EDC primer layer. Once the EDC primer layer has fully cured, the assembly is further coated, in general initially with a surfacer and then with a top coat or with a base coat and clear coat.
2) Optionally pretreated metal body and fiber-reinforced plastics parts provided with an electrically conductive primer coat or provided with an outer, electrically conductive coating on the primer coat are assembled and together pass through a conventional electrodeposition coating process, wherein the metal body and fiber-reinforced plastics parts are provided with an EDC primer layer. Once the EDC primer layer has fully cured, the assembly is further coated, in general initially with a surfacer and then with a top coat or with a base coat and clear coat.
3) Optionally pretreated, EDC-primed metal body optionally provided with further coating layers and fiber-reinforced plastics parts provided with a primer coat or with at least one further outer coating layer are assembled and together further coated.

Depending upon the shape of the fiber-reinforced plastics part and/or the location thereof within a larger structure to be coated and/or the requirements placed upon the fully coated fiber-reinforced plastics part, further coating of the fiber-reinforced plastics substrates provided with a primer coat may comprise the entirety or only a proportion of the primed surface, in the latter case in particular the surfaces of the fiber-reinforced plastics substrate which are visible to an observer.

The following Examples are intended to illustrate the invention in greater detail. The following abbreviations have been used: pbw means parts by weight, and wt-% means weight percent.

### Examples

### Example 1 (Production of an alkoxysilane-functional urethane acrylate A):

478 pbw of hexamethylene diisocyanate biuret (75%, Tolonate® HDB/75 from Rhodia), 8 pbw of neopentyl glycol and 30 pbw of butyl acetate were initially introduced into a flask. The reaction mixture was heated to a maximum of 60°C. 235 pbw of a secondary aminoalkoxysilane (Silquest® A 1170, Witco) were then apportioned in such a manner that the temperature did not exceed 80°C. Rinsing was performed with 40 pbw of butyl acetate. Once an NCO value of < 5.9 had been reached, 0.6 pbw of methylhydroquinone and 0.5 pbw of dibutyltin dilaurate solution (10%) were added. 149 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with butyl acetate and the solids content of the colorless resin solution obtained was adjusted to 75 % (1h/150°C).

The resin had a calculated double bond equivalent weight of 725 and a calculated content of silicon bound in alkoxysilane groups of 5,1 wt-%, relative to resin solids content.

### Example 2 (Production of an alkoxysilane-functional urethane acrylate B)

529 pbw of hexamethylene diisocyanate biuret (75%, Tolonate® HDB/75 from Rhodia), 9 pbw of neopentyl glycol and 20 pbw of butyl acetate were initially introduced into a flask. The reaction mixture was heated to a maximum of 60°C. 179 pbw of a secondary aminoalkoxysilane (Dynasilan 1189, Degussa) were then apportioned in such a manner that the temperature did not exceed 80°C. Rinsing was performed with 40 pbw of butyl acetate. Once an NCO value of < 6,3 had been reached, 0.6 pbw of methylhydroquinone and 0.5 pbw of dibutyltin dilaurate solution (10%) were added. 165 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with butyl acetate and the solids content of the colorless resin solution obtained was adjusted to 75 % (1h/150°C).

The resin had a calculated double bond equivalent weight of 655 and a calculated content of silicon bound in alkoxysilane groups of 2,8 wt-%, relative to resin solids content.

### Example 3 (Production of alkoxysilane-functional urethane acrylates C)

121 pbw of a primary aminoalkoxysilane (Dynasilan AMMO, Degussa) were reacted with 86 pbw of butyl acrylate in 35 pbw of butyl acetate in a 2 liter flask. Once the exothermic reaction had subsided, 515 pbw of hexamethylene diisocyanate biuret (75%, Tolonate® HDB/75 from Rhodia) and 35 pbw of butyl acetate were added. At a maximum temperature of 80°C, the reaction was continued until an NCO value of 7.15% was reached. The reaction mixture was then combined with 0.6 pbw of methylhydroquinone and 0.5 pbw of dibutyltin dilaurate (as 10% solution). 156 pbw of hydroxyethyl acrylate were then apportioned in such a manner that the temperature did not exceed 80°C. The reaction mixture was stirred and not allowed to exceed a maximum of 80°C until an NCO value was no longer detectable. The mixture was then diluted with butyl acetate and the solids content of the colorless resin solution obtained was adjusted to 75 % (1h/150°C).

The resin had a calculated double bond equivalent weight of 558 and a calculated content of silicon bound in alkoxysilane groups of 2,5 wt-%, relative to resin solids content.

### Production of primer coating compositions 4a-c

### Example 4a

A primer coating composition usable in the process according to the invention was formulated from the following constituents:

| | |
|---|---|
| 60.0 wt-% | of urethane acrylate resin C from Example 3 |
| 3.0 wt-% | of conductive carbon black (Printex® LT from Degussa) |
| 5.0 wt-% | of talcum |
| 1.0 wt-% | of Darocur® 1173 (photoinitiator, CIBA) |
| 0.3 wt-% | of Irgacure® 819 (photoinitiator, CIBA) |
| 30.7 wt-% | of butyl acetate |

100 pbw of this coating base were mixed shortly before application with 3.0 pbw of a 10 wt-% solution of p-toluenesulfonic acid in xylene.

### Example 4b

A primer coating composition usable in the process according to the invention was formulated from the following constituents:

| | |
|---|---|
| 52.2 wt-% | of urethane acrylate resin A from Example 1 |
| 17.4 wt-% | of conductive pigment (Minatec® 30 CM from Merck) |
| 4.3 wt-% | of talcum |
| 0.9 wt-% | of Darocur® 1173 (photoinitiator, CIBA) |
| 0.3 wt-% | of Irgacure® 819 (photoinitiator, CIBA) |
| 24.9 wt-% | of butyl acetate |

100 pbw of this coating base were mixed shortly before application with 3.0 pbw of a 10 wt-%solution of p-toluenesulfonic acid in xylene.

### Example 4c

The same method was used as in Example 4b, except that urethane acrylate resin B from Example 2 was used instead of urethane acrylate resin A from Example 1.

### Application and curing of primer coating compositions 4a, band c

Since SMC test sheets are not directly available for coatings testing purposes, 10 x 20 cm SMC test sheets were sawn from the SMC plastics skin of uncoated car tailgates (from Inoplast). The test sheets were suspended and spray coated on both sides and on the edges with primer coating compositions 4a, b and c to a dry film thickness of 25 µm and flashed off for 10 minutes. The primer layer on both sides of the test sheets was then irradiated with a conventional commercial UV radiation emitter (medium pressure mercury emitter from Fusion, 240 W/cm, 100% output, at a UV radiation emitter/object distance of 16 cm and a belt speed of 3 m/min) and then thermally cured for 20 minutes at an object temperature of 80°C.

In order to simulate curing in the shaded areas of an appropriately shaped three-dimensional substrate, i.e., in the areas of a substrate that are not reached by the UV radiation emitters, test sheets were produced in a manner similar to that described above and coatings 4a-c were then cured only with moisture/thermal energy. After application, the coatings were in each case left for 10 minutes at room temperature (flash-off phase) and then cured for 20 minutes at 80°C (circulating air oven). In all cases, a tack-free coating layer is obtained, indicating adequate cross-linking in shaded areas. This was also confirmed by OK results in the xylene test (brief description: a xylene-soaked filter paper was placed on the coating film for 10 minutes. Evaluation: OK = no visible change).

The SMC test sheets provided with primer layers cured by UV irradiation and thermal curing were suspended and spray coated to a dry film thickness of 35 µm µm with a conventional commercial aqueous surfacer and, after flashing off for 10 minutes at room temperature, baked for 20 minutes at an object temperature of 165°C. On the basis of 5 test sheets in each case, fewer than 2 popping defects per side of test sheet were observed in the surfacer layer in the case of 4a as well as of 4b and 4c.

By way of comparison, the same procedure was applied, but using unprimed SMC test sheets. On the basis of 5 test sheets in each case, no fewer than 15 popping defects per side of test sheet were observed in the surfacer layer.

## Claims

1. A process for primer coating fiber-reinforced plastics substrates which comprises the steps of (1) applying a primer layer onto a fiber-reinforced plastics substrate and (2) curing the applied primer layer, wherein the primer layer is formed from a coating composition which comprises a binder system with free-radically polymerizable olefinic double bonds and with hydrolyzable alkoxysilane groups, wherein the resin solids of the coating composition exhibit a C=C double bond equivalent weight of 200 to 2000 and a content of silicon bound in alkoxysilane groups of 1 to 10 wt-% and wherein curing of the primer layer proceeds by free-radical polymerization of the C=C double bonds on irradiation with high energy radiation and by the formation of siloxane bridges under the action of moisture, **characterized in that** the fiber-reinforced plastics substrates are automotive parts selected from wings, bonnets, boot lids, doors and mirror housings.

2. A process according to claim 1, wherein the resin solids of the coating composition have a C=C double bond equivalent weight of 300 to 1500 and a content of silicon bound in alkoxysilane groups of 1 to 7 wt-%.

3. A process according to claim 1 or 2, wherein the alkoxysilane groups comprise trialkoxysilane groups.

4. A process according to claim 1, 2 or 3, wherein the binder system with free-radically polymerizable olefinic double bonds and with hydrolyzable alkoxysilane groups additionally comprises hydroxyl groups.

5. A process according to any one of the preceding claims, wherein the coating composition used to form the primer layer contains constituents which provide electrical conductivity.

6. A process according to any one of the preceding claims, wherein UV radiation is used as the high energy radiation.

7. A process according to any one of the preceding claims, wherein, after the primer layer is cured, a coating is applied selected from the group consisting of a single layer top coat and a multilayer coating.

8. Fiber-reinforced plastics substrates as defined in claim 1, coated according to the process of any one of the preceding claims.

## Patentansprüche

1. Verfahren zum Beschichten von faserverstärkten Kunststoffsubstraten mit einem Primer, welches die nachfolgenden Verfahrensschritte aufweist: (1) ein Auftragen einer Primerlage auf ein faserverstärktes Kunststoffsubstrat und (2) ein Härten der aufgetragenen Primerlage, wobei die Primerlage durch eine Beschichtungszusammensetzung gebildet wird, welche ein Bindemittelsystem mit olefinischen Doppelbindungen, welche durch freie Radikale polymerisierbar sind, sowie mit hydrolysierbaren Alkoxysilangruppen enthält, wobei die Harzfeststoffe der Beschichtungszusammensetzung ein Äquivalentgewicht an C=C Doppelbindungen von 200 bis 2000 und in den Alkoxysilangruppen ein Gehalt an gebundenem Silikon von 1 bis 10 Gewichtsprozent aufweisen und wobei das Härten der Primerlage abläuft durch eine Polymerisation der C=C Doppelbindungen durch freie Radikale infolge einer Bestrahlung mit einer hohen Energie und durch die Bildung von Siloxanbrücken unter der Einwirkung von Feuchtigkeit, **dadurch gekennzeichnet, dass** die faserverstärkten Kunststoffsubstrate aus Automobilteilen bestehen, welche ausgewählt sind unter Kotflügeln, Motorhauben, Kofferraumklappen, Türen und Spiegelgehäusen.

2. Verfahren gemäß Anspruch 1, bei welchem die Harzfeststoffe der Beschichtungszusammensetzung ein Äquivalentgewicht der C=C Doppelbindung von 300 bis 1500 und in den Alkoxysilangruppen ein Gehalt an gebundenem Silikon von 1 bis 7 Gewichtsprozent aufweisen.

3. Verfahren gemäß Anspruch 1 oder 2, bei welchem die Alkoxysilangruppen Trialkoxysilangruppen umfassen.

4. Verfahren gemäß Anspruch 1, 2 oder 3, bei welchem das Bindemittelsystem mit den durch freie Radikale polymerisierbaren, olefinischen Doppelbindungen und mit den hydrolysierbaren Alkoxysilangruppen zusätzlich Hydroxylgruppen umfasst.

5. Verfahren gemäß irgendeinem der vorhergehenden Ansprüche, bei welchem die Beschichtungszusammensetzung, welche zum Bilden der Primerlage verwendet wird, Bestandteile enthält, welche eine elektrische Leitfähigkeit bewirken.

6. Verfahren gemäß irgendeinem der vorhergehenden Ansprüche, bei welchem UV Strahlung als die Strahlung von hoher Energie verwendet wird.

7. Verfahren gemäß irgendeinem der vorhergehenden Ansprüche, bei welchem anschließend an die Härtung der Primerlage eine Beschichtung aufgetragen wird, welche ausgewählt wird aus der Gruppe bestehend aus einer einlagigen Deckbeschichtung und einer mehrlagigen Beschichtung.

8. Faserverstärkte Kunststoffsubstrate gemäß Anspruch 1, welche gemäß dem Verfahren nach irgendeinem der vorhergehenden Ansprüche beschichtet worden sind.

## Revendications

1. Procédé pour revêtir par une couche de fond des substrats de plastiques renforcés par des fibres qui comprend les étapes (1) d'application d'une couche de fond sur un substrat de plastique renforcé par des fibres et (2) de durcissement de la couche de fond appliquée, dans lequel la couche de fond est formée à partir d'une composition de revêtement qui comprend un système de liant avec des liaisons doubles oléfiniques polymérisables par radicaux libres et avec des groupes d'alkoxysilane hydrolysables, dans lequel les solides de résine de la composition de revêtement affichent un poids équivalent de liaisons doubles C=C de 200 à 2000 et une teneur en liaison de silicium dans les groupes d'alkoxysilane de 1 à 10% en poids et dans lequel le durcissement de la couche de fond se déroule par une polymérisation par radicaux libres des liaisons doubles C=C lors d'une irradiation avec un rayonnement à haute énergie et par la formation de ponts de siloxane sous l'action de l'humidité, **caractérisé en ce que** les substrats de plastiques renforcés par des fibres sont des pièces d'automobiles choisies parmi des ailes, des capots, des couvercles de coffre, des portes et des boîtiers de rétroviseur.

2. Procédé suivant la revendication 1, dans lequel les solides de résine de la composition de revêtement possèdent un poids équivalent de liaisons doubles C=C de 300 à 1500 et une teneur en liaison de silicium dans les groupes d'alkoxysilane de 1 à 7% en poids.

3. Procédé suivant la revendication 1 ou 2, dans lequel les groupes d'alkoxysilane comprennent des groupes de trialkoxysilane.

4. Procédé suivant la revendication 1, 2 ou 3, dans lequel le système de liant avec des liaisons doubles oléfiniques polymérisables par radicaux libres et avec des groupes d'alkoxysilane hydrolysables comprend en outre des groupes hydroxyles.

5. Procédé suivant l'une quelconque des revendications précédentes, dans lequel la composition de revêtement utilisée pour former la couche de fond contient des constituants qui procurent une conductivité électrique.

6. Procédé suivant l'une quelconque des revendications précédentes, dans lequel un rayonnement UV est utilisé comme rayonnement à haute énergie.

7. Procédé suivant l'une quelconque des revendications précédentes, dans lequel, après le durcissement de la couche de fond, un revêtement est appliqué choisi dans le groupe constitué d'une couche du dessus monocouche et d'un revêtement multicouche.

8. Substrats de plastiques renforcés par des fibres tels que définis dans la revendication 1 revêtus suivant le procédé de l'une quelconque des revendications précédentes.
